# EUROPEAN PATENT APPLICATION

(11) **EP 1 338 940 A1**
(43) Date of publication of application: **27.08.2003**
(21) Application number: 03002710.6
(22) Date of filing: 06.02.2003
(51) Int. Cl.: G06F 1/00

(54) **Universal password generator**

(30) Priority: 25.02.2002 US 81853
(71) Applicant: Chrysalis- ITS Inc., Ottawa, Ontario K2G 6P9 (CA)
(72) Inventor: Couillard, Bruno, Gatineau, Quebec (US)
(74) Representative: Lecce, Giovanni

(57) **Abstract**

A universal password generator for generating a password, in response to a challenge from a compatible challenging system is disclosed. A challenging system, which access is requested by a user provides a challenge to be entered to the universal password generator. The universal password generator comprises a memory for storing secure data, the secure data for use in performing a predictable secure process wherein absent knowledge of the secure data, the secure process is not capable of being performed and a secure processor for securely processing the received challenge using the secure process and the stored secure data to determine a response compatible with the challenging system thereto, the challenge being securely processed such that the user is not able to determine a same response to a same challenge absent the universal password generator. The response, in a human intelligible form, is displayed on a display and upon entering manually the response into the compatible challenging system, access to the challenging system is provided.

## Description

### Field of the Invention

The present invention relates to user authentication and more specifically in the area of providing user authentication using a password generated in response to a challenge to the password generator, the challenge provided by a challenging system.

### Background of the Invention

Security has become an important issue in terms of offering secure access to resources, such as secure access to a building, or to a computer, and so forth. Access to a personal computer or to predetermined software within the computer is often protected by a code in the form of a personal identification number or PIN that is typed in on a keyboard attached to the computer for which access is requested. The main use of security access codes such as a PIN is to deter and hopefully prevent unauthorized access to the computer. A main problem with typing in a password using a keyboard is that a Trojan horse fraudulently installed on the computer can read and store the password, rendering the computer security ineffective.

In 1981, the National Institute of Standards and Technology (NIST) approved a data security process referred to as the "Data Encryption Standard." The Data Encryption Standard details the use of a cryptographic function, referred to as a "Data Encryption Algorithm" for encrypting and decrypting digital information by a single, unique key. To ensure security of the transmitted information, the nature of the key is held in confidence between the source and the targeted recipient. Recently, the NIST has approved a new Federal Information Processing Standards (FIPS 197), which will be effective May 2002. As is apparent to someone with skills in the art, there is in constant evolution in secure communication standards, and as a result a firm wishing to communicate with other firms using these standards must constantly upgrade in order to be able to meet the changing requirements. The firm must update all their devices, which communicate with the government agency, in this example, such that their devices meet the most recent security requirements.

Of course, a change in the encryption standards should not jeopardize the possibility of establishing any type of communication between different systems, it should still allow communication to occur, although the nature of data communicated therebetween should be monitored for sensitive information, since as long as there is a difference in the encryption standards, data communicated between the two parties will be only as strong as the weakest encryption standard.

Today, 56-bit symmetric keys seem to offer only marginal encryption security. It seems that many people cannot easily remember and use a password derived from a combination of 32 bits, which is equivalent to a random 10-digit number, about 6 random letters and digits, or a pair of words from an average English dictionary. Several studies over many years have found that a significant percentage of user-chosen passwords can be found with a modest computational effort, having an effective size of less than 30 bits. In practice, due to human limitations, many passwords are small. This is a problem for many systems, which can be attacked using a repeated computation using all possible (or likely) guesses for the password. This is known as a brute-force, or dictionary attack. Dictionary attacks can occur on-line, therefore, a security problem relates to eavesdropping over a communications network. An eavesdropper can tie into such a network and detect characters being transmitted. If the information being transmitted, including a PIN is not encrypted, the eavesdropper can electronically detect and use that information. This eavesdropping problem is exacerbated by the fact that PIN numbers encoded using relatively simple encoding algorithms can, without too much difficulty, be decoded and the PIN information extracted.

Forcing everyone to double or triple the size of their passwords, and expecting them to not write them down, or expecting most people to be comfortable using "pass-phrases", is denying the inevitable truth. People cannot, or will not, properly handle anything larger than a small password, so systems must protect them from attack.

Similarly, to access a bank account through an automated banking machine, an individual has to possess a bank smart card wherein data associated with the individual are stored. To perform operations on his account, a smart card reader reads the bank smart card, the individual provides a PIN having less than 14 bits, the PIN and the data associated to the individual are processed and after verification the individual is allowed to perform the operations. When the entered PIN is compared against a stored PIN and no match is found, access is prohibited. The combination does not prevent from attacks that can occur on-line. As a further security measure the number of unsuccessful attempts to use the PIN whether legitimate or not are easily detected and thwarted, by denying access. Banking ATM machines thwart attack by retaining the user's card after three bad access attempts to prevent "hackers" from inputting a large number of PIN in an attempt to gain access by a brute force approach.

In order to solve this problem, there are many approaches to preventing playback of recorded passwords, as for example done by an "eavesdropping" device. For example, a smart card is used to receive a challenge and respond to a host system. Unfortunately, this requires that every accessible system be provided with a smart card reader. Further, in high security applications, the smart card reader must originate from a trusted source and as such, is typically single sourced. It is evident to those of skill in the art that single sourcing a smart card reader that operates with all operating systems (including legacy systems), all hardware platforms, and all access type systems, is prohibitively expensive and often not immediately possible. As such, implementation of the prior art systems in large organizations is hindered.

A further approach is to obtain a password from a source independent to the system which access is required. Such a system is provided by CRYPTOCard Corporation that designed a password generator, which provides a password in response to the provision of a PIN. The password is then provided to the system, which access is required, and access is provided therein. As will be apparent to someone in the art, such a generator solves a problem of memorizing a long password, however, a PIN that has to be known is provided to the generator. Of course, using a PIN for having a generator generates a password is similar to providing a specific PIN for accessing a building, a bank account and so forth.

To overcome the above-mentioned drawbacks and others from the prior art, it would be advantageous to provide a system that prevents provision of a password or PIN that can be electronically detected and decoded for later playback.

Furthermore, it would be advantageous to provide a system that prevents the need for a plurality of compatible dedicated hardware interface ports, for example, for use with a photocopier, a fax machine, a computer system, a doorway access system, a telephone system, a wireless phone system, a banking system, and so forth.

### Object of the Invention

It is an object of this invention to provide a universal password generator compatible with most existing hardware and software security systems, and it is a further object of this invention to provide a universal security device that generates a password according to a challenge provided by a challenging system for which access is requested.

### Summary of the Invention

In accordance with a preferred embodiment of the present invention, there is provided a universal password generator for generating a password in response to a challenge from a compatible challenging system, the universal password generator comprising: a) an input transducer for receiving a challenge, the challenge provided by the compatible challenging system to an individual and for being provided to the input transducer by the individual; b) a memory for storing secure data, the secure data for use in performing a predictable secure process wherein absent knowledge of the secure data, the secure process is not capable of being performed; c) a secure processor for securely processing the received challenge using the secure process and the stored secure data to determine a response compatible with the challenging system thereto, the challenge being securely processed such that the individual is not able to determine a same response to a same challenge absent the universal password generator; and, d) a display for displaying the response in a human intelligible form, wherein, in use, upon providing a challenge to the input transducer, the response is displayed which, when entered manually into the compatible challenging system, provides access thereto.

In accordance with another preferred embodiment of the present invention, 'there is provided a universal password generator for generating a password in response to a challenge from a compatible challenging system, the universal password generator comprising: a) an input transducer for receiving a challenge, the challenge provided by the compatible challenging system to an individual and for being provided to the input transducer by the individual; b) a memory for storing secure data; c) a secure processor for securely processing the received challenge using stored secure data to determine a response compatible with the challenging system and requiring the stored secure data for determination thereof; and, d) a display for displaying the response in a human intelligible form, wherein, in use, upon providing a challenge to the input transducer, the response is displayed which, when entered manually into the compatible challenging system, provides access thereto.

Advantageously, the invention provides a method for generating passwords using a universal password generator. in response to a challenge from a compatible challenging system, the method comprising the steps of: a) receiving a challenge provided by the challenging system; b) securely processing the received challenge according to securely stored data; c) determining a response in dependence upon the secure processing, the response compatible with the challenging system such that an individual is not able to determine a same response to a same challenge absent the universal password generator; and, d) displaying the response in an human intelligible form, wherein upon providing the response to the challenging system access is provided thereto.

### Brief Description of the Drawings

Exemplary embodiments of the invention will now be described in conjunction with the following drawings, in which:

Fig. 1a is an example of a prior art filled password window dialog box on a computer screen display for Mr. Smith can access his computer;

Fig. 1b is an example of a bank smart card of Mr. Smith;

Fig. 1c is an example of a access building smart card of Mr. Smith;

Fig. 2 is an example of the electronic systems in a firm;

Fig. 3 is a schematic illustration of the universal password generator according to the present invention;

Fig. 4 is a flow chart of a method of using the universal passwords generator; and,

Fig. 5 is a flow chart of a further method of securing access to a protected device using the universal passwords generator.

### Detailed Description of the Invention

While the term "PIN" is used for convenience throughout the specification, it should be understood that a user's PIN includes any string of characters or symbols, including numbers, alphabetic characters, a combination of numbers and letters, symbols, control characters, and so forth.

Referring to Fig. 1a, an example of a screen display showing a login identity of an individual and an associated password to allow access to a computer and/or a computer network is shown. Classically, the login identity is the user's name, illustrated here, as "Smith". For security purpose, each character of the password is replaced with a star on the display to prevent reading of same. However, this does not protect the computer from a Trojan horse application capturing keystrokes or data within the computer, for example, or from someone watching the user's hands while the password is typed in. Furthermore, most users are unsophisticated users; their password is most probably a word or number significant to them and easily remembered, as for example the favorite sports team, the license plate number, dog's name, partner's birth date and so forth.

Optionally, to make the system more difficult to break, a computer network is organized in such a way that all the employees are prompted to enter a new password in order to change their passwords at regular intervals. Alternatively, the system arbitrarily selects passwords and assigns them to the users. Unfortunately, such passwords are difficult to memorize by a user and are often forgotten. The users are therefore tempted to write their passwords on paper and store the information in an easily reachable, but most probably insecure location, as for example below the telephone, or in the drawer next to the keyboard.

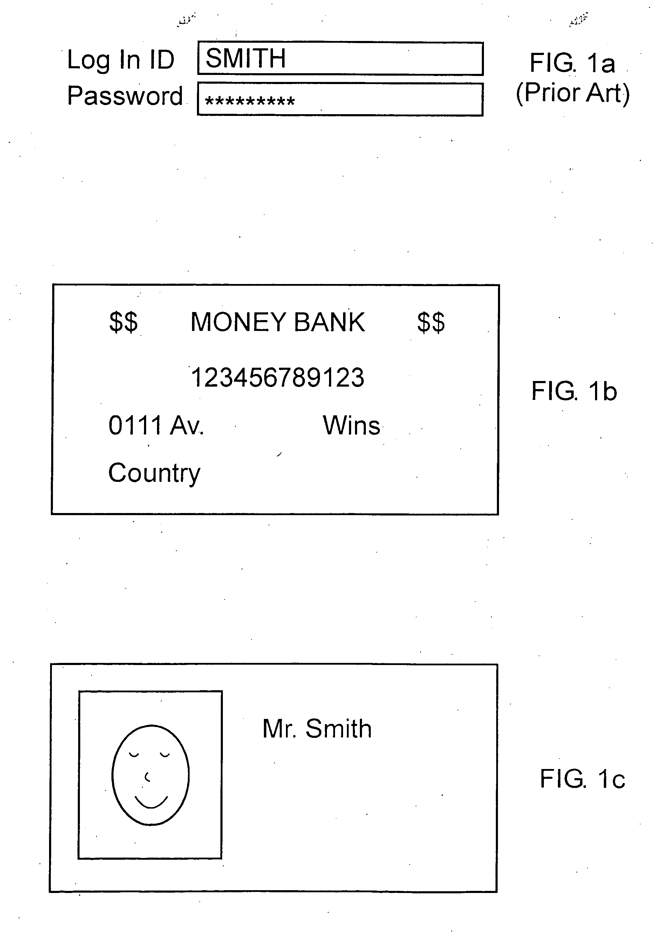

Shown in Fig. 1b and 1c are different examples of security access cards belonging to the same individual "Smith" for a convenient daily use. Typically, information related to the owner is stored on the smart card, and when the smart card is inserted into a smart card reader, which is connected to a specific machine, the reader reads information from the smart card. Furthermore, the smart cards are used concurrently with a password. For example, the individual inserts a bank smart card, as shown in of Fig. 1b, in a smart card reader attached to an automated bank machine. The reader reads the information stored on the card and is then prompted to enter the PIN previously associated with information stored on the smart card.

Similarly, for entering the building where an individual works, the individual inserts a building access card, an example of which is shown in Fig. 1c. Optionally the individual is also prompted to provide a PIN to meet further security verification requirements as set forth for accessing such a building. Therefore, all the entrances of the building are equipped with a security entry device in the form of a smart card reader that is coupled with a keypad for use in entering a PIN prior accessing the building. Of course, the smart card reader and/or the keypad is replaced or additionally supported by a biometric input device.

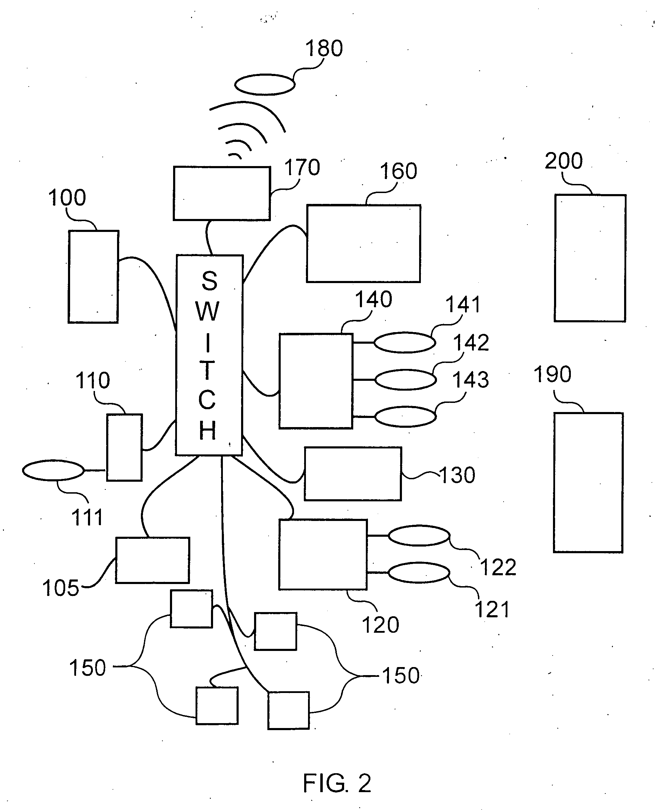

Fig. 2, illustrates an example of a number of electronic systems connected to a common network to address the needs of a firm are shown. In this example, the firm is a relatively old company, however the firm has updated its system in order to be equipped with the most recent and secure devices whenever a device was changed. However, in the area of security and secure devices, technology is advancing quite fast and as a result software, ports, peripheral devices and so forth are in constant evolution. Of course these advances are not limited to secure systems, but to also compatibility between systems and so forth.

In the present example, a main frame 100, a SUN™ station 110 comprising a SCSI port 111, a doorway access system 105, a Macintosh unit 120 comprising afire wire port 121 and a USB port 122, a server 130, a PC unit 140 comprising a USB port 141, a serial port 142 and a parallel port 143, a plurality of workstations 150. Optionally, a communication system 160 is also connected to the main frame for use in establishing communication with military systems, such as submarines and aircrafts, where the communication system has an uplink/downlink system 170 for establishing communication via a satellite 180.

Furthermore, the firm is also equipped with a phone system 190, which comprises regular desk phones, wireless phones and faxes. Of course, the firm is also equipped with the usual office equipment as for example photocopiers 200. Of course, all the above-enumerated devices can be located on different floors in a building and in different buildings.

Furthermore, to have brand new equipment installed throughout offices is costly and some parts of the equipment, as for example the regular desk telephones, the photocopier, are second hand devices. Therefore, they do not benefit from recent advances processing technology, but have nonetheless been incorporated in the security system and adapted such that security requirements are met. Of course, the security requirement for using a photocopier is different than requirements for using other systems in such an office.

Access to most of the electronic devices listed is limited to authorize personal; where authentication of employees is rigorous especially when it comes to meeting the security requirements for secure governmental and/or military communication facilities. A company does not want to have its system infiltrated by. a competitor and therefore wants an efficient and convenient security system to protect its information. Most of the devices of the firm system have either a keypad, for example in the form of a keyboard, a security input device, as for example a biometric contact imager for capturing fingerprint, or a smart card reader connected to provide input authentication information of an individual requesting access to the system.

In the firm system, illustrated in Fig. 2, devices have common features, such as for example the Macintosh unit 120 and the PC unit 140, both have USB ports, which allows for a same compatible device to be connected to either. The SUN™ station 110, on the other hand, has a SCSI port. Therefore, when requiring access to the PC and Macintosh units, the individual provides security information in the same manner, for example, using a contact imager connected to the USB port of each unit in order to read a biometric information sample from the user.

The individual however, cannot access the SUN™ station because the SUN™ station has a smart card reader connected via the SCSI port, and the individual has not been provided with a smart card compatible with the smart card reader attached to the SUN™ station, because according to his duties, he is not supposed to have access to the SUN™ station. Unfortunately, there is no alternative to such a state, where if in an emergency situation the individual requires access to the SUN™ station, they cannot. A way of overcoming such a drawback is to equip the SUN™ station with a biometric input device, and the PC and Macintosh units with a smart card reader each.

Of course, within the firm, every station has to be equipped with every existing input device such that the individual desiring access uses any identification means, such as a smart card or biometric input, independently of the form of the means. This means that every employee has to be provided with at least a smart card, passwords for accessing the different systems, and a stored biometric sample unique to the individual, such that this sample is used as a templates against which newly provided biometric information is compared when used in the identification process of an individual.

As is apparent to someone with skill in the art, when security requirements are changed, such as the encryption standard requirement is upgraded, all the security input devices are modified to meet the new security requirements, which is a costly and not easily achieved operation.

Therefore, it is preferable to have a universal device that replaces the security interface systems such as smart card readers and biometric input devices, such that overall security is enhanced. Advantageously, the universal device of the present invention generates passwords in response to a challenge, in the form of a message, provided by a secured device, the message optionally identifying the device to which access is requested.

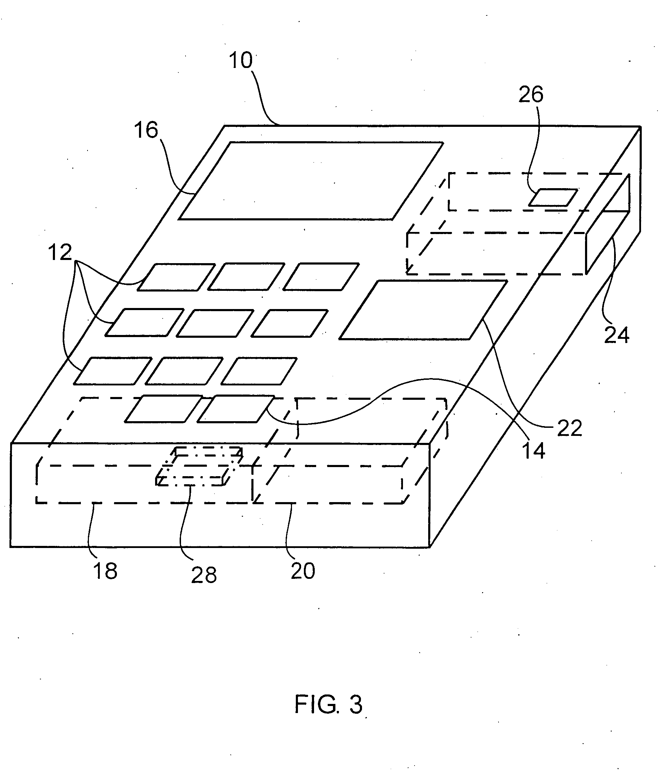

Referring to Fig. 3, a schematic illustration of a universal password generator is shown. The password generator 10, the size of which is comparable with a handheld calculator, comprises a series of keys 12 in the form of touch buttons, the keys 12 are disposed in a similar way to a telephone keypad, or most of the automated bank machine keypads, such that the universal password generator 10 comprises ten keys corresponding to the ten digits, a plurality of the ten keys are associated with characters. Of course the layout of the keys is not limited to ten keys and various combinations are possible. One key is a validation key 14 for validating the manually typed in data in the form of a challenge using the keys 12. The password generator also comprises a display screen 16 for displaying the typed in challenge. The password generator 10 comprises a processor 18, in the form of a secure processor, which receives the challenge that has been entered by the use of keys, after pressing the validation key 14. The processor is in communication with a memory 20 where a secure process is stored. The processor 18 is for secure processing of the challenge according to stored secure data within the memory, the secure process dependent on the stored secure data and for providing a response in dependence therefrom. The result of the secure processing is a password displayed on the display 16, in a human intelligible form, for entry by the user into the secured system keypad.

Alternatively, the processor is in communication with a secure memory 20 where a plurality of secure processes is stored. The processor selects a secure process from the plurality of secure processes in memory 20 in dependence upon the challenge data entered into the universal password generator, such that the provided password is generated according to the selected secure process. Once a password is generated, the secure processor provides the password to the display 16 in a human intelligible form for use by the user. Optionally, the user selects a secure process by entering a device type or secured system identifier into the password generator 10.

Optionally, the password generator also comprises a security input device 22 in the form of a biometric imager or a microphone, for accepting a biometric information sample from the user, such that the device 10 settings are personalized to that user. The security input device decreases the risk of having the password generator used by unauthorized people. For example the password generator 10 is only operational when the security processor has determined a match between the stored biometric template of the user with the biometric data read from the biometric imager.

A further example of a security input device for accepting a biometric sample is a voice recognition system. A user provides a voice sample to the security processor, which generates data related to the voice sample, and compares the generated data to stored voice sample data within the password generator.

The password generator 10 further comprises an on/off switch 26 for turning the device 10 on prior to use and turning off the device when a password has been generated. For example, the password generator is supplied with batteries located in drawer 24 for providing the energy needed for a normal use. Alternatively, a solar battery is provided with a solar power version of the password generator. Optionally, an energy conservation system exists in case the user forgets to switch the password generator off; after a delay without a request from the user, the device turns off automatically. Preferably, the memory is of a non-volatile type and as a result is not affected when the batteries are changed. Optionally, an indicator of the remaining energy level is added to the device to notify the user of a need to change batteries.

Optionally, the password generator 10 further comprises a clock 28 in communication with the processor 18. Advantageously, an indication of the time, i.e. an indication of the minute concurrently with an indication of the date for example, is incorporated in the generated password, which implies that the generated passwords are different for each instance that the password is generated because of the change in time.

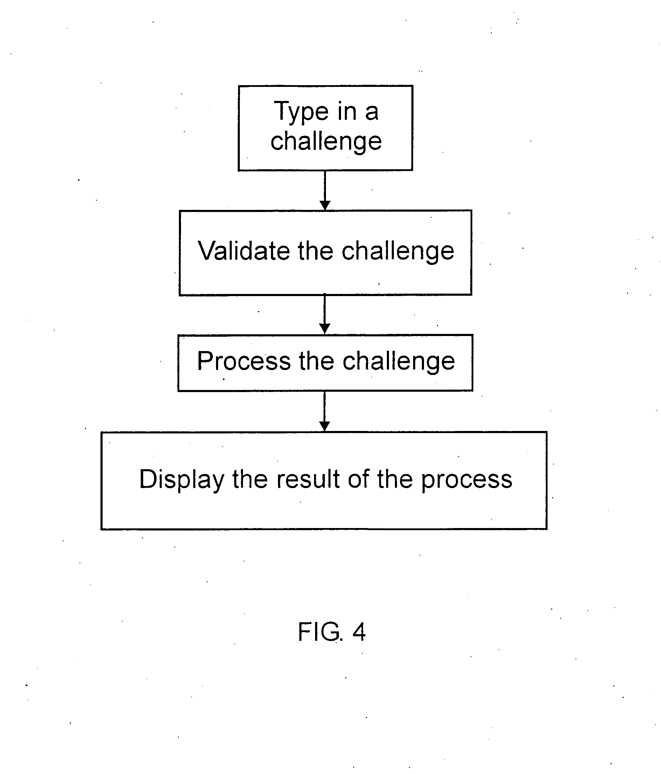

Referring now to Fig. 4, a flow chart of a method of using the universal password generator is shown. An individual wanting to access a protected device is provided with message in the form of a challenge by the protected device or challenging system. Of course, the challenge provided by the challenging system, is compatible with the password generator. The challenge is typed in the password generator using the keys 12 at step 400 and validated with the validation key 14 at step 410. The challenge is then provided to the processor 18, which securely processes the challenge according to the secure process stored in the secure memory 20 at step 420. A result of the secure processing of the challenge is a generated password, which is transmitted to the display 16, where it is displayed on the password generator display in human intelligible form at step 430.

A use of the password generator as it is described above is for generating passwords inside a company where the secure processor generates passwords according to a same secure process for all the challenging systems. Therefore, an individual wanting to log in to a computer provides a challenge compatible with the password generator in the form of the series of numbers "22835", for example. The individual types in this challenge on the password generator keypad and validates the challenge. The secure processor processes the entered challenge according to the stored secure process, which for example corresponds to secure mathematical processing on the value. An example of a secure process being, for example, swapping a position of the second and the fifth digits and subtracting 567. According to such a secure process, the result is 25265. The secure processor transmits the result to the display where it is shown to the user. The individual then types the generated password result into the computer for obtaining access thereto.

Of course, each challenging system provides a challenge independently of the other challenging systems. For example, the challenge provided by a photocopier is 98263, and the one issued by the door lock mechanism of the office building is 6548965. Further, each challenge is optionally different so that a record playback attack is prevented. Further, by providing characters within a challenge indicative of the challenging device, the secure process within the password generator is optionally selectable. For example, a challenge beginning with 332 is unique to the photocopier and one beginning with 331 is for computer access. Thus, the password generator can support any number of different devices simultaneously, with each requiring a different challenge response generated by a different secure process.

Furthermore, there is no requirement that the various challenges be securely processed in an identical way. Indeed the secure processing might depend on various non-constant parameters, as for example the time of the day or the date. Therefore, the passwords generated from one minute to the other and/or from one day to the other are different.

The challenge is processed according to data-encrypting standards in accordance with those set forth by a system administrator. If an upgrade of the standard occurs, the secure processes stored within the universal password generator are updated to reflect the new standards. A feature is additionally provided within the password generator which allows a first card comprising the secure processor and secure processes to be removed from the universal password generator and a new card comprising an updated secure processor and updated secure processes, in accordance with the new requirements, is inserted. Similarly, an upgrade of a security system is easily achieved by downloading a secure process comprising the new requirements.

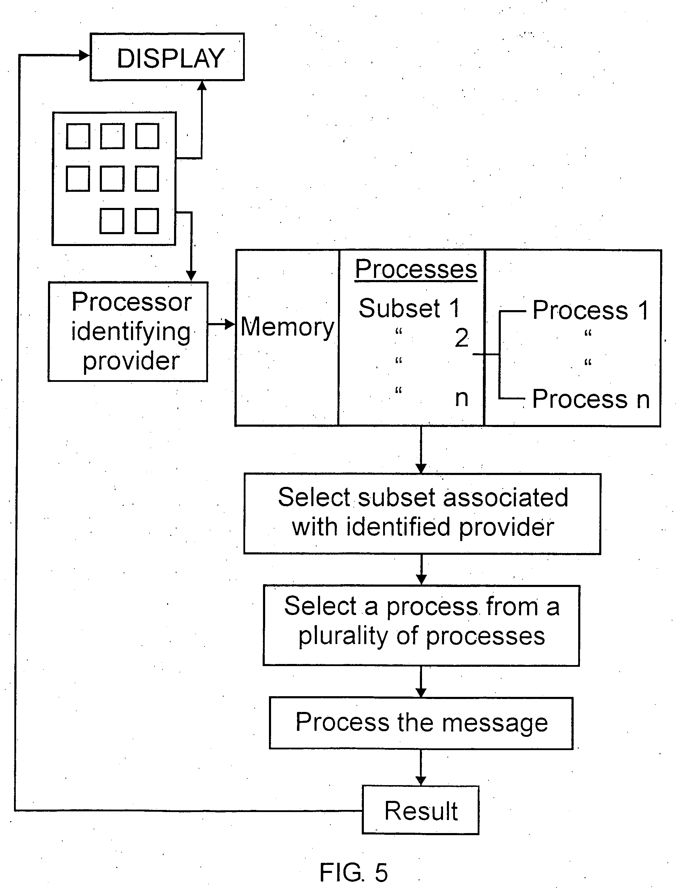

Referring now to Fig. 5, a flow chart of another method of using the universal password generator is shown. An individual wanting to use a challenging system in the form, for example, of a telephone for a long distance call is provided with a challenge from the telephone company when the individual is finished dialing the telephone number. The individual types in the challenge on the password generator 10 using the keys 12 and validates the challenge with the validation key 14.

According to the challenge provided by the challenging system, the secure processor identifies the challenging system, which is in the above example, a telephone connected to an identified telephone company. From the secure memory 20 where the plurality of secure processes are stored, the secure processor selects a secure process corresponding to the identified company. The result of the secure process of the challenge is a human readable password that is provided to the display of the universal password generator.

The user now has a generated password that is provided to the challenging system, which authenticates the user and grants access to the user. In the above example, the user enters the generated password on the telephone keypad such that the telephone company authenticates the password and allows the long distance call to take place.

Numerous other embodiments may be envisaged without departing from the spirit or scope of the invention.

## Claims

1. A universal password generator for generating a password in response to a challenge from a compatible challenging system, the universal password generator comprising:
a) an input transducer (14) for receiving a challenge, the challenge provided by the compatible challenging system to an individual and for being provided to the input transducer by the individual;
b) a memory (20) for storing secure data, the secure data for use in performing a predictable secure process wherein absent knowledge of the secure data, the secure process is not capable of being performed;
c) a secure processor (18) for securely processing the received challenge using the secure process and the stored secure data to determine a response compatible with the challenging system thereto, the challenge being securely processed such that the individual is not able to determine a same response to a same challenge absent the universal password generator; and,
d) a display (16) for displaying the response in a human intelligible form,
wherein, in use, upon providing a challenge to the input transducer, the response is displayed which, when entered manually into the compatible challenging system, provides access thereto.

2. A universal password generator according to claim 1, wherein the secure data comprises an encrypting key.

3. A universal password generator according to claim 1, wherein the secure data comprises data indicative of instructions for execution as a secure process.

4. A universal password generator according to claim 1, comprising a clock (28) for providing a time value for use in secure processing of the challenge in dependence upon the time value, wherein in use, the response is different for different time values.

5. A universal password generator according to claim 1, comprising a security input device (22) for authenticating the individual.

6. A universal password generator according to claim 5, wherein the security input device is a biometric imager for capturing an image of a biometric information source.

7. A universal password generator according to claim 6, wherein the security input device comprises a processor for processing the image, for comparing data derived from the image with a stored template, and for, in dependence upon a comparison result, authenticating the individual.

8. A universal password generator according to claim 3, wherein the secure process comprises a plurality of secure processes, each secure process from the plurality of secure processes being associated with a compatible challenging system.

9. A universal password generator according to claim 8, comprising a second secure processor for identifying the compatible challenging system in accordance with the provided challenge, the second secure processor for selecting a secure process from the plurality of secure processes and for securely processing the received challenge.

10. A universal password generator according to claim 9, wherein the secure processor and the second secure processor are same.

11. A method for generating passwords using a universal password generator in response to a challenge from a compatible challenging system, the method comprising the steps of:
a) receiving a challenge provided by the challenging system (400);
b) securely processing the received challenge according to securely stored data (420);
c) determining a response in dependence upon the secure processing, the response compatible with the challenging system such that an individual is not able to determine a same response to a same challenge absent the universal password generator (420); and,
d) displaying the response in an human intelligible form (430),
wherein upon providing the response to the challenging system access is provided thereto.

12. A method for generating passwords according to claim 11, wherein the step of securely processing comprises the step of encrypting the challenge according to the secure data stored, wherein the secure data comprises an encrypting key.

13. A method for generating passwords according to claim 11, wherein the step of securely processing the received challenge to determine a response comprises the step of providing a time value determined by a clock such that the response is different for different time values.

14. A method for generating passwords according to claim 11, wherein the step of securely processing the received challenge comprises the steps of:
a) identifying the challenging system in dependence upon the provided challenge; and,
b) selecting a secure process associated with the identified challenging system, the secure process being selected from a plurality of secure processes dependent on stored secure data.

15. A method for generating passwords according to claim 11, comprising prior to step (a) the step of authenticating an individual using a biometric sample provided to an input security device.

16. A method for generating passwords according to claim 15, comprising the steps of:
e) providing a biometric information source to a biometric imager,
f) capturing an image of the biometric information source;
g) generating data derived from the imaged biometric information; and,
h) comparing the generated data with stored templates of biometric data, and for, in dependence upon a comparison result, performing one of authenticating and other than authenticating the individual,
wherein the step (d) is performed in dependence upon the result of the step (h).

17. A universal password generator for generating a password in response to a challenge from a compatible challenging system, the universal password generator comprising:
a) an input transducer (14) for receiving a challenge, the challenge provided by the compatible challenging system to an individual and for being provided to the input transducer by the individual;
b) a memory (20) for storing secure data;
c) a secure processor (18) for securely processing the received challenge using stored secure data to determine a response compatible with the challenging system and requiring the stored secure data for determination thereof; and,
d) a display (16) for displaying the response in a human intelligible form,
wherein, in use, upon providing a challenge to the input transducer, the response is displayed which, when entered manually into the compatible challenging system, provides access thereto.
